# EUROPÄISCHE PATENTSCHRIFT

(11) **EP 1 565 918 B1**
(45) Veröffentlichungstag und Bekanntmachung des Hinweises auf die Patenterteilung: **03.09.2008**
(21) Anmeldenummer: 03780051.3
(22) Anmeldetag: 25.11.2003
(51) Int. Cl.: G21F 9/00, G21F 9/04, G21F 9/28, C02F 1/00, B01D 61/00, C02F 9/00

(54) **VERFAHREN ZUM BEHANDELN VON RADIOAKTIVEM ABWASSER**
METHOD FOR TREATING RADIOACTIVE WASTE WATER
PROCEDE DE TRAITEMENT D'EAUX RADIOACTIVES

(30) Priorität: 25.11.2002 DE 10255064
(43) Veröffentlichungstag der Anmeldung: 24.08.2005
(73) Patentinhaber: NUKEM Technologies GmbH, 63755 Alzenau (DE); NIS Ingenieurgesellschaft mbH, 63755 Alzenau (DE)
(72) Erfinder: ROSENBERGER, Stefan, 63776 Mömbris (DE); HESSE, Klaus, 57462 Olpe (DE)
(74) Vertreter: Stoffregen, Hans-Herbert
(86) Internationale Anmeldenummer: PCT/EP2003/013242
(87) Internationale Veröffentlichungsnummer: WO 2004/049352

(56) Entgegenhaltungen:
- EP-A- 0 819 649
- WO-A-01/44115
- WO-A-92/03829
- CH-A- 673 957
- US-A- 4 865 726
- US-A- 5 366 634
- PATENT ABSTRACTS OF JAPAN vol. 1995, no. 04, 31. Mai 1995 (1995-05-31) & JP 07 000961 A (TOSHIBA CORP), 6. Januar 1995 (1995-01-06)

## Beschreibung

Die Erfindung bezieht sich auf ein Verfahren zum Behandeln von radioaktivem Abwasser.

Aus der WO 01/44115 A2 ist ein Verfahren zum Behandeln radioaktiver Abwässer bekannt, bei dem das Abwasser von einem ersten Behälter kommend in einer Behandlungsstufe einer Querstromfiltration sowie einer parallel zu dieser geschalteten Teilstromfiltration zugeführt wird sowie gegebenenfalls einen Ionenaustauscher durchströmt, wobei der Teilstromfiltration ein durch die Querstromfiltration aufkonzentrierter Teil des Abwassers zugeführt wird. Dabei kann in dem Behälter eine Volumenreduzierung durch Zugabe chemischer Stoffe wie Sulfide erfolgen. Bei dem bekannten Verfahren besteht auch die Möglichkeit, Ultrafiltrationsanlagen in Kombination mit einer Mikrofilter aufweisenden Teilstromfiltration so zu betreiben, dass weitere Flüssigabfälle, die mit einem zusätzlichen Verfahren konditioniert werden müssten, grundsätzlich nicht mehr anfallen.

Flüssigabfälle insbesondere aus kerntechnischen Anlagen enthalten suspendierte und gelöste Stoffe mit Radionukliden, die nicht in die Umwelt gelangen dürfen. Entsprechende Flüssigabfälle fallen zum Beispiel durch Wässer, wie beispielsweise Komponentenspülwässer, Laborwasser, Kondensatreinigung, Dekontamination, Sumpfwasser, Harzreinigungswässer, Reinigungswässer, Wäschereiabwässer oder ähnliches an. Dabei existieren nach dem Stand der Technik verschiedene etablierte Verfahren, mittels der die Flüssigabfälle möglichst volumenreduzierend behandelt und so entstehender Rückstand für ein Endlager konditioniert werden.

Relativ große Abwasservolumina werden im Regelfalle mittels großer Verdampferanlagen - häufig auch parallel zueinander geschaltete Verdampferanlagen - auf Feststoffkonzentrationen zwischen 20 % und 30 % aufkonzentriert. Dieses Konzentrat enthält sowohl gelöste als auch suspendierte Stoffe. Zur Konditionierung werden diese Konzentrate im Regelfall in speziellen Konzentrattrocknern ergänzend getrocknet (Salzblock oder trockenes Pulver) oder mit Zuschlagstoffen (z. B. Zement oder anderen Verfestigem) in stabile Formen überführt. Eine Trennung der Nuklide von dem Feststoffgemisch, das häufig große Anteile an inaktiven Stoffen (z. B. Salze) enthält, erfolgt nicht. Die Verdampfer werden häufig durch Mischbettfilter (Anionen und Kationenaustauscher für gelöste Stoffe) sowie Zentrifugen (suspendierte Stoffe) unterstützt bzw. ergänzt.

Wässer aus nuklearen Wäschereien oder anderen Bereichen mit organischen Inhaltsstoffen können mittels Bakterien biologisch vorbehandelt und die suspendierten Feststoffe teilweise mittels Zentrifugen abgeschieden werden.

Bei denen bekannten Verfahren werden suspendierte Stoffe ohne Vorkonzentration mit verschiedenen Filtern mit unterschiedlichen Porengrößen abgetrennt. Zum Einsatz gelangende Filter sind Anschwemmfilter (Kieselgur), Einwegfilterpatronen, rückspülbare Filterpatronen und Querstromfiltrationsanlagen, z. B. Nanofiltration oder Ultrafiltration.

Gelöste Stoffe (Ionen) werden im Regelfall mittels Umkehrosmose, Ionenaustauschern oder anderen Medien abgetrennt.

Organische Stoffe wie Öle können z. B. mit Aktivkohle abgeschieden werden.

Einige Verfahren kombinieren die Abscheidung von suspendierten Stoffen (mittels Filtern) und gelösten Stoffen (mittels Ionenaustauschern) und setzen zur Unterstützung der Abscheidung Flockungshilfsmittel ein.

Um die Abfallvolumina zu reduzieren, sind weitere Verfahren enavickelt worden, die die inaktiven Salze (z. B. Borate) chemisch-thermisch von den Radionukliden in den Konzentraten abtrennen (z. B. Borsäurerückgewinnung) und recyklieren, bzw. es gelangen Verfahren zum Einsatz, die erschöpfte Ionenaustauscher zersetzen (z. B. Pyrolyse). All diese bekannten Verfahren haben erhebliche Nachteile.

Die Konzentrierung von radioaktiven und nicht radioaktiven Stoffen (Verdampfer) ergibt ein relativ hohes Abfallvolumen im Vergleich zum tatsächlichen radioaktiven Volumen und erfordert somit größere Abfallbehälter, größere Lager, aufwendigeren Transport und höhere Endlagerkosten. Allerdings bilden die inaktiven Salze oft in dem fertig konditionierten Abfall eine feste (lösliche) Matrix, die die Radionuklide einschließen und damit in Endlagergebinde immobilisieren.

Abwässer nuklearer Wäschereien aber auch Duschen und Waschbecken werden größtenteils mittels Filterkerzen und teilweise Ionenaustauschern gereinigt. In einigen Anwendungen wird der Inhalt von Waschwasserbehältern auch durch Zugabe von z. B. Powex-Ionenaustauschern ausgeflockt. Hierdurch fallen ebenfalls relativ große Abfallvolumina an. Dies kann durch die biologische Behandlung mit Zentrifugen minimiert werden, zeigt jedoch - bedingt durch die schlechten Trenneigenschaften der Zentrifuge für kolloidale Feststoffe - eindeutige Grenzen in ihrer Abscheiderate.

Einweg- und rückspülbare Filter haben - bedingt durch die Porengröße - nur unzureichende Abscheideraten für kleine kolloidale Partikel. Zusätzlich setzen sich die Filter durch Aufbau eines Filterkuchens gegebenenfalls sehr schnell zu. So ist z. B. bei Filtrierung von biologisch behandeltem Abwaschwasser ein Filter mit 10 µm Porengröße innerhalb weniger Minuten verstopft. Gleichzeitig passieren mehr als 50 % der Feststoffe den Filter, da diese eine Größe von weniger als 10 µm aufweisen. Im Falle von Einwegfiltereinsätzen werden hohe Mengen an Sekundärabfall erzeugt. Mehrere hundert verbrauchte Filtereinsätze pro Jahr und Kernkraftwerk sind erforderlich.

Querstromfilteranlagen (Nanofiltration, Ultrafiltration, Umkehrosmose) sind in der Lage Feststoff abzuscheiden, zeigen jedoch den Nachteil, dass ein relativ hohes Volumen an noch zu konditionierendem Konzentrat erzeugt wird. Bei Konzentratvolumen entsprechender Querstromfiltrationsanlagen von bis zu mehreren hundert Kubikmetern pro Jahr und Kernkraftwerk bereitet dies erhebliche Probleme.

Es sind auch Verfahren bekannt, die die zuvor beschriebenen Maßnahmen kombinieren. Zum Beispiel werden üblicherweise Abwasserströme mittels Verdampfer behandelt, die auf andere Weise nicht gereinigt werden können, während andere mittels verschiedener Filtrationsverfahren gereinigt werden. So werden z. B. Einweg- oder rückspülbare Filter mit Ionenaustauschern kombiniert. Zur Erhöhung der Effektivität der Filtration kleiner Partikel werden Flockungshilfsmittel wie z. B. Polyacrylamide zugegeben. Hierdurch besteht das Problem, dass neben teilweise üblichem Sekundärabfall die genaue Dosierung der Flockungshilfsmittel nahezu nicht möglich ist. Die Passage kleiner Partikel und/oder Flockungshilfsmittel durch die Filter ist die Folge. Diese Feststoffe lagern sich auf die Oberfläche der nachfolgenden Ionenaustauscher an und stellen eine Barriere für einen effizienten Ionenaustausch dar. Die Ionenaustauscher erschöpfen sich früher. Somit ist zusätzlicher Sekundärabfall entstanden.

Aus der DE 195 21 959 C2 ist ein Verfahren zur Aufbereitung von tensidhaltigen und organisch belasteten radioaktiven Waschwässern aus kerntechnischen Einrichtungen bekannt. Dabei werden die Waschwässer unter aeroben Bedingungen einem mikrobiellen Abbau der abbaubaren Inhaltsstoffe unterworfen. Sodann werden die enthaltenen Feststoffe abgetrennt. Dies kann in einer kombinierten Dekanter/Separator-Anlage erfolgen.

Der vorliegenden Erfindung liegt das Problem zu Grunde, ein Verfahren der eingangs genannten Art so weiterzubilden, dass eine möglichst vollständige Separierung von Flüssigkeit und anderen unschädlichen Inhaltsstoffen, wie z. B. inaktiven Salzen, von Radionukliden ermöglicht wird, so dass der Anfall von zu entsorgenden Substanzen minimiert wird.

Erfindungsgemäß wird das Problem durch das Verfahren gemäß Anspruch 1 gelöst:
- Zuführen des Abwassers in einen ersten Behälter,
- Reduzierung von organischem Anteil des Abwassers in dem ersten Behälter durch Oxidation oder durch aerobe Behandlung,
- Querstromfiltration des feststoffbeladenen Wassers derart, dass zum einen der Querstromfiltration entnommenes Filtrat/Penneat entweder unmittelbar genutzt oder dem ersten oder einem weiteren Behälter zugeführt wird und zum anderen in der Querstromfiltration abgeschiedene und/oder zurückgehaltene Feststoffe in einer Teilstromfiltration einem zweiten Behälter zugeführt werden, in dem Feststoffe gravimetrisch abgeschieden werden und
- Wiederzuführen von dem zweiten Behälter entnommenen und von Feststoffen teilgereinigtem Abwasser in die Querstromfiltration.

Dabei kann der Querstromfiltration gegebenenfalls ein Ionenaustauscher oder eine E-lektrodeionisationsstufe nachgeschaltet werden, um von diesem gesammelte ionische Radionuklide erneut dem ersten Behälter oder einem Behälter oder Reaktor zuzuführen.

Insbesondere ist vorgesehen, dass mit Radionukliden angereicherte Feststoffe in der Teilstromfiltration gravimetrisch abgeschieden werden.

Die Teilstromfiltration wird in einem zweiten Behälter durchgeführt, in dem gravimetrisch in einer bodenseitigen ersten Zone Feststoffe abgeschieden werden, in einer nach- , folgenden über der ersten Zone verlaufenden zweiten Zone das von der Querstromfiltration stammende aufkonzentrierte Abwasser über einen Zulauf zuströmt und oberhalb der zweiten Zone in oder nach einer dritten Zone über einen Ablauf abströmt. Dabei werden die Steiggeschwindigkeit und die Gestaltung des Behälters zwischen dem Zulauf und dem Ablauf derart eingestellt, dass eine Sedimentation und teilweise Agglomeration von Partikeln ermöglicht wird. Insbesondere beläuft sich die Steiggeschwindigkeit V zwischen in etwa 0,1 cm/min bis in etwa 5,5 cm/min, insbesondere in etwa 2 cm/min.

Die der ersten Zone des zweiten Behälters entnommenen Feststoffe in Form von Flüssigkeitsschlamm werden sodann bei der Abscheidung von Bakterien mit H₂O₂ oxidiert und - wenn notwendig - entwässert und sodann getrocknet. Durch die H₂O₂-Zugabe kann der Flüssigkeitsschlamm vor der Trocknung mineralisiert werden, und zwar dann, wenn in dem Reaktor ein aerober Abbau von organischen Stoffen erfolgt und mit Radionukliden angereicherte Biomasse entsteht, welche mittels Querstromfiltration abgeschieden wurde.

Zwischen der ersten Zone und dem Zulauf wird eine Sedimentationsstufe ausgebildet, die die zweite Zone sein kann. Der Bereich zwischen Zulauf und Ablauf ist als Umkehrzone ausgebildet und kann die dritte Zone oder ein Abschnitt dieser sein.

Des Weiteren sieht die Erfindung vor, dass das aufkonzentrierte Abwasser der Teilstromfiltration über einen parallel zu der Querstromfiltration verlaufenden gegebenenfalls ein Förderaggregat aufweisenden Bypass zugeführt wird, in dem ein Teil des aufkonzentrierten Abwassers unmittelbar in die Querstromfiltration zurückströmt.

Erfindungsgemäß wird ein Modularverfahren vorgeschlagen, das auf die jeweiligen Reinigungsaufgaben in ihrer Gesamtheit durch Einsatz aller Module oder ausgewählter sinnvoll kombinierter Einzelmodule ausgelegt werden kann. Dabei ist eines der Module der Reaktor, in dem eine Volumenreduzierung des zu behandelnden Abwassers erfolgt, und zwär entweder durch eine sogenannte kalte Oxidation z. B. mit Ozon oder einem anderen geeigneten Oxidationsmittel sowie Fällung oder durch biologischen Abbau. Ein weiteres Modul kann die Ionisierung von einem die Querstromfiltration verlassendes Filtrat/Permeat bei noch vorhandenen Radionukliden sein, gleichwenn die erfindungsgemäße Lehre grundsätzlich darauf abzielt, durch das erste und zweite Modul und gegebenenfalls eine Kaskadierung dieser oder zumindest eines der Module vollständig gereinigtes und unmittelbar verwertbares Filtrat bzw. Permeat zu erlangen.

Erfindungsgemäß ist eine sequentielle Kombination biologischer, chemischer und physikalischer Effekte gegeben, wodurch durch Modularität eine klare zielgerichtete verfahrenstechnische Lösung für nahezu alle radioaktiven Flüssigabfälle ermöglicht wird.

Ein wesentlicher Vorteil des modularen Verfahrens ist die verfahrenstechnische Adaptierbarkeit der einzelnen Module ohne Beeinflussung der anderen. Dies wird durch die Konzentrierung von verfahrenstechnischen Einzelaufgaben (z. B. Trennen suspendierter Partikel) auf singuläre Module erreicht. Die Kombination von mehreren verfahrenstechnischen Aufgaben (z. B. Trennen von suspendierten Stoffen und gelösten Stoffen) in einem Modul wird bewusst vermieden.

Insbesondere durch die Weiterentwicklung der aus der WO 01/44115 bekannten Teilstromfiltration aus dem Kreislauf der Querstromfilteranlage erlaubt eine technisch wirtschaftliche Verknüpfung der einzelnen biologischen, chemischen und physikalischen Module und ermöglicht eine Vielzahl noch zu erläuternder Vorteile.

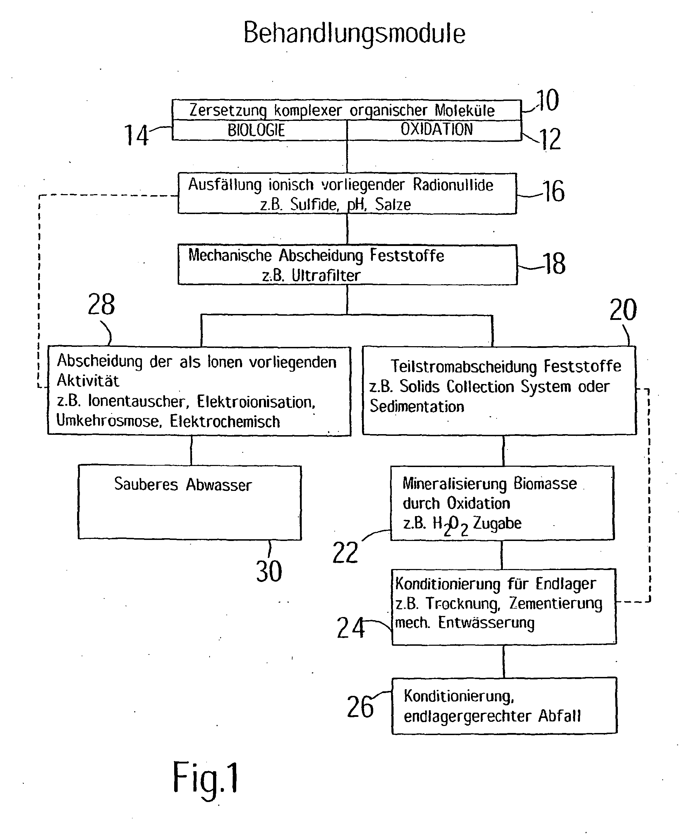

Die sequentiell zu kombinierenden Einzelmodule und deren Funktionen sollen rein prinzipiell anhand der Fig. 1 erläutert werden.

In einem ersten Modul 10 erfolgt eine Zerstörung bzw. Zersetzung organischer Bestandradioaktiver Flüssigkeit durch eine biologische Behandlung 14. So kann z.B. eine biologische Behandlung bei sonstigen Abwässern, wie z. B. Dekontaminationsflüssigkeiten oder Waschwässern aus der nuklearen Wäscherei, erfolgen. Die entsprechende Abwasserbehandlung erfolgt dabei in einem Sammelbehälter, der auch als Reaktor zu bezeichnen ist. Durch die Verfahrensweise in dem ersten Modul 10 bzw. 14 wird eine Volumenreduktion des Feststoffes im Abwasser erzielt und organische Masse, da diese im Endlagergebinde faulen und gären könnte, wird entfernt. Mit der Zerstörung der organischen Bestandteile bzw. komplexer Molekülketten wird eine bessere Abscheidung der Radionuklide in den nächsten Modulen vorbereitet, insbesondere in einer mechanischen und gegebenenfalls darauf folgend einer ionischen Abscheidestufe.

Bei den biologischen Behandlungen werden auch gelöst vorliegende Radionuklide durch Biosorption an die Biomasse gebunden und in abscheidbare Formen überführt.

Im Falle, dass die organischen Bestandteile durch Oxidation zerstört werden, ist eine Ausfällung ionisch vorliegender Radionuklide durch Zugabe von entsprechenden Chemikalien wie Sulfiden und/oder inaktiven Metallsalzen zur Konzentrationserhöhung von spezifischen Nukliden (z. B. Kobalt) und/oder pH-Verschiebung (z. B. pH 8 bis pH 9) möglich. Da eine biologische aerobe Behandlungsstufe als Modul 14 vorgesehen ist, kann dieser Schritt, der in Fig. 1 mit dem Bezugszeichen 16 versehen ist, gegebenenfalls entfallen, da in der biologischen Vorbehandlung mit der beschriebenen geeigneten Fahrweise des Bioreaktors der überwiegende Anteil der gelösten Aktivität durch Biosorption in die Bakterienmatrix aufgenommen wird und somit mechanisch in nachfolgenden Modulen abgeschieden werden kann.

Im Falle einer Vergleichsweisen Oxidation können die sequentiell aufeinander folgenden Verfahrensschritte 12 rund 16 auch insoweit zusammengefasst werden, dass diese in ein- und demselben Reaktor durchgeführt werden. Insoweit sind Oxidation und Ausfällung als ein Modul zu bewerten. Alternativ besteht jedoch auch die Möglichkeit, dass die Ausfällung außerhalb des Reaktors, und zwar während des Förderns des Abwassers zu den nachfolgend zu erläuternden Modulen erfolgt.

Um die Umsetz-/Sorptionsgeschwindigkeit der radioaktiven Ionen bei einer aeroben Biosorption zu beschleunigen, kann Ultraschall eingesetzt werden.

In einem nachfolgenden Modul 18 erfolgt eine mechanische Abscheidung der Feststoffe aus der Suspension, und zwar bevorzugterweise mit einer Querstromfiltrationsanlage. Dabei bestimmt die Porengröße des Filters die Abscheidequalität, wobei bevorzugt Ultrafilter zum Einsatz gelangen. Die Porengröße sollte dabei insbesondere in etwa 0,03 µm betragen, so dass gelöste Stoffe hindurchtreten, jedoch feste, insbesondere Bakterien, die die radioaktiven Stoffe gebunden haben, zurückgehalten werden.

Die abgeschiedenen bzw. zurückgehaltenen Feststoffe in der Querstromfiltrationsstufe bzw. dem Modul 18 werden sodann mittels einer Teilstromabscheidung 20 behandelt, wobei grundsätzlich eine Abscheidung mittels Mikrofilter für bestimmte Abwässer erfolgen kann, wie diese in der WO 01/44115 beschrieben worden ist, auf deren Offenbarung ausdrücklich Bezug genommen wird, oder aber bevorzugter Weise durch fraktionale Sedimentation.

Eine Vorbereitung des Abwassers auf die mechanische Abscheidung erfolgt durch eine Bioreaktor-Vorbehandlung deshalb, wird eine endlagergerechte Konditionierung der teilstromabgeschiedenen Feststoffe mittels kalter Oxidation z. B. durch H₂O₂ zur Zerstörung der Bakterienmasse und endlagergerechten Mineralisierung des Konzentrats vorgenommen. Entsprechende Verfahrensschritte werden auch dann durchgeführt, wenn eine Zerstörung sonstiger abgeschiedener organischer Bestandteile (z. B. Öle, Fette, Haare u. a.) erforderlich ist. Die mineralisierte Suspension wird zur Lagerung getrocknet.

Alternativ zur Trocknung ist eine mechanische Entwässerung auf zulässige Restwassergehalte oder auf Verfestigung (z. B. Zementierung) möglich. Die entsprechenden Verfahrensschritte und deren Abfolge sind in der Fig. 1 mit den Bezugszeichen 22 und 24 versehen. Als Ergebnis erlangt man konditionierten endlagergerechten Abfall, der im Wesentlichen aus den Radionukliden und mineralischen Stoffen besteht (Bezugszeichen 26). Ein Faulen und Gären wird vermieden, da keine organischen Stoffe im Abfall vorliegen.

Sofern das der Querstromfiltration, bevorzugt Ultrafiltration, entnommene Filtrat/Permeat noch Radioaktivität aufweisen sollte, ist eine Trennung der sodann nahezu 100 % als Ionen vorliegenden Radioaktivität mittels geeigneter Verfahren wie Ionentauscher, Elektrodeionisation, elektrolytische Abscheidung, Umkehrosmose oder Nanofiltration möglich (Verfahrensschritt 28). Die in diesem Verfahren anfallenden ionenreichen Konzentrate können gegebenenfalls dem Modul 10 bzw. dem Verfahrensschritt Fällung 16 entsprechend der zuvor erfolgten Erläuterungen wieder zugeführt werden.

Erfolgt eine biologische Abwasserbehandlung, so wird das Permeat mit den Radionukliden dem Reaktor unmittelbar zugeführt. Alternativ kann das Permeat auch einem weiteren Reaktor wie Bioreaktor zugeführt werden. Unabhängig hiervon können bei Einschleusung in den gleichen oder einen weiteren Bioreaktor weitere z. B. waschaktive oder andere Substanzen zugesetzt werden, die radioaktive Ionen anlagern und anschließend den Bakterien als Nahrung oder zur Besiedelung dienen. Bei der Zersetzung dieser Substanzen werden die Radionuklide in die Bakterien aufgenommen bzw. angelagert und können mechanisch mittels Querstronifiltration abgeschieden werden. Mit dieser Abscheide-/Recyclingkaskade lassen sich hohe Abscheideraten ohne zusätzliche Komponenten erzielen.

Die aus dem Ionentauscher, der Elektrodeionisationanlage etc. austretende Flüssigkeit ist im Normalfall von allen Radionukliden bis zur technischen Nachweisgrenze z. B. 2,5 Bq/l für CO₆₀ befreit und kann somit als industrielles Abwasser abgegeben werden.

Das erfindungsgemäße Verfahren bzw. die erfindungsgemäße Vorgehensweise haben folgende wesentlichen Vorteile. Es erfolgt ein Eliminieren aller organischen Bestandteile, die die mechanische Filtration erschweren bzw. verhindern und zum Endlagervolumen bzw. mikrobiologischen Zersetzung im Endlagergebinde beitreten könnten (Inertisierung). Das Verfahren, d. h. die erfolgte Kombination der einzelnen Verfahrensschritte gestattet die Separierung der Radionuklide oder andere anorganische Stoffe und eine volumenminimierende entilagergerechte Konditionierung von Verdampferkonzentraten, für die zur Zeit keine Behandlungsmethode bekannt ist. Es erfolgt keine Zurückhaltung inaktiver Salze in dem System, die das Endlagervolumen erhöhen. Es entsteht ein minimales endzulagerndes Abfallvolumen, da das erfindungsgemäße Verfahren im Wesentlichen auf Metallabscheidung (Radionuklide) ausgelegt ist. Die Erfindung zeichnet sich durch ein modulares System aus, das in der Gesamtheit bzw. als Einzelmodule je nach Aufgabenstellung zusammengestellt bzw. ergänzt werden kann. Durch die klare Aufgabenzuweisung der einzelnen Funktionseinheiten können diese verfahrenstechnisch optimal an die jeweilige Aufgabe angepasst werden, ohne dass andere Aufgaben negativ beeinflusst werden. Das Verfahren bzw. die Kombination der Verfahrensschritte kann sowohl für Betriebsabwässer als auch für Schlämme und Wässer aus dem Rückbau von kerntechnischen Anlagen eingesetzt werden, um nur einige Beispiele zu nennen. Falls erforderlich, können die inaktiven Salze abgegeben, gegebenenfalls auch z. B. wertvoll recykliert werden. So kann z. B. Borsäure als inaktives Medium mittels bekannter Verfahren aus der flüssigen Phase zurückgewonnen werden.

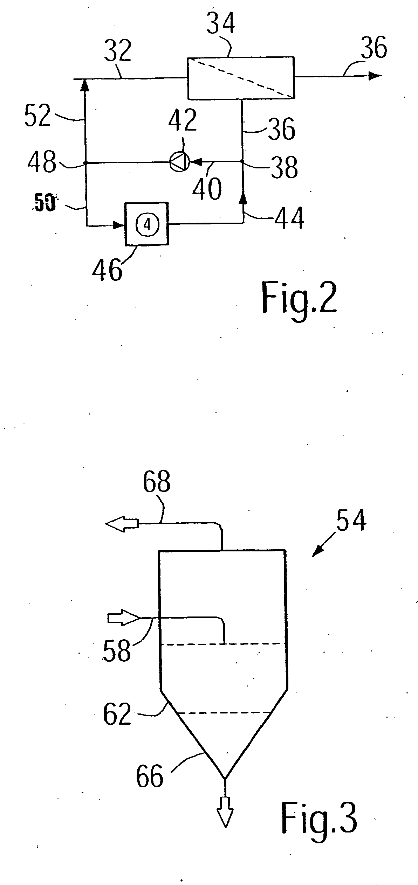

Das erfindungsgemäße Verfahren, soweit das ergänzende Modul zur mechanischen Querstromabscheidung und die Teilstromfiltration nach den Verfahrensschritten 18 und 20 der Fig. 1 betroffen ist, soll anhand der Fig. 2 bis 4 näher erläutert werden.

Eine Suspension mit z. B. 0,1 bis 1 Vol.-% Feststoff aus einer aeroben biologischen Waschwasserreinigungsstufe sedimentiert teilweise in mehreren Stunden. Es verbleibt jedoch weiterhin ein hoher Feinanteil, der auch nach vielen Tagen nicht sedimentiert. Dieser hohe Anteil an Kolloidalen verhindert die ausreichende Abscheidung der Feststoffe/Radionuklide und damit Reinigung der Flüssigkeit in einem noch akzeptabel großen Sedimentationsbehälter. Nach dem Stand der Technik wird die Feststoffabscheidung üblicherweise mittels einer Zentrifuge unter Anwendung hoher Zentrifugalkräfte vorgenommen, wobei z. B. Normalbeschleunigungen zwischen 30.000 m/s² und 60.000 m/s² auftreten. Obwohl hohe Abscheideraten dabei erzielt werden können, ist festzustellen, dass besonders kleine Feststoffpartikel (Abscheiderate ist abhängig von Größe und Dichte des Feststoffes) die Zentrifuge durchdringen. Die hohen Scherspannungen und Kräfte bewirken auch ein Auseinanderbrechen in kleinere schlecht abscheidbare Teilchen bzw. Zerstörung der Bakterienhüllen und damit erneutes Freisetzen der durch Biosorption in den Bakterien aufgenommenen bzw. angelagerten ionischen Radionuklide. Damit wird bei radioaktiven Abwässern eine gegebenenfalls unzulässig hohe Radioaktivität ausgetragen bzw. es wird verhindert, dass höher aktive Wässer auf diese Weise behandelt werden können.

Durch die erfindungsgemäß zum Einsatz gelangende Querstromfiltration 20 können entsprechende Suspensionen aus der aeroben Behandlung mit z. B. 0,1 bis 1 Vol.-% Feststoffe auf höhere Konzentrationen von z. B. 4 Vol.-% Feststoffe aufkonzentriert werden. Durch Koagulationsmechanismen wie z. B. Van der Waal'sche Kräfte, Brownsche Molekularbewegung, elektrostatische Anziehung und/oder chemische Bindung koagulieren kleine kolloidale Teilchen zu größeren Agglomeraten. Sodann wird ein Teilstrom - beispielhaft 20 % des Anlagendurchsatzes der Querstromfiltrationsanlage - aus dem Hauptumlaufstrom der Querstromfiltrationsanlage zur Teilstromfiltration entnommen, unter geringer Scherkraftbeanspruchung der Flüssigkeit und des Feststoffes gereinigt und nach teilweiser Feststoffabtrennung durch die Sedimentation ersterer wieder zugeführt. Dies ergibt sich auch rein prinzipiell aus Fig. 2.

So führt eine Leitung 32, die von einem nicht dargestellten Reaktor ausgeht, in dem entweder eine Vorbehandlung des Abwassers durch Biologie oder durch kalte Oxidation erfolgen kann, zu einem Querstromfilter 34 wie Ultrafilter, dessen Filtrat/Permeat über eine Leitung 36 entnommen wird. Aus der Schmutzseite des Querstromfilters 34 wird somit aufkonzentriertes Abwasser über eine Leitung 36 abgeführt und über eine Pumpe 42 oder sonstiges Förderaggregat über die einen Hauptkreislauf bildenden Rohrleitungen 36, 40, 52, 32 zur Spülung des Querstromfilters wie insbesondere Ultrafilters umgewälzt. Die Geschwindigkeit in dem Hauptkreislauf kann 3m/sec oder mehr betragen. Am Verzweigungspunkt 48 wird durch eine Zweigleitung 50 ein Teilstrom zur Teilfiltration entnommen und dem Teilstromfilter 46 zugeführt und über die Leitung 44 im Verzweigungspunkt 38 dem Hauptkreislauf wieder zugeführt. In der Leitung 50 oder der Leitung 44 kann zusätzlich ein Förderaggregat eingebaut sein. Ferner kann im Verzweigungspunkt 48 zusätzlich ein Zentrifugalabscheider vorgesehen sein, um größere Feststoffe in den Sammelbehälter der Teilstromabscheidung umzuleiten.

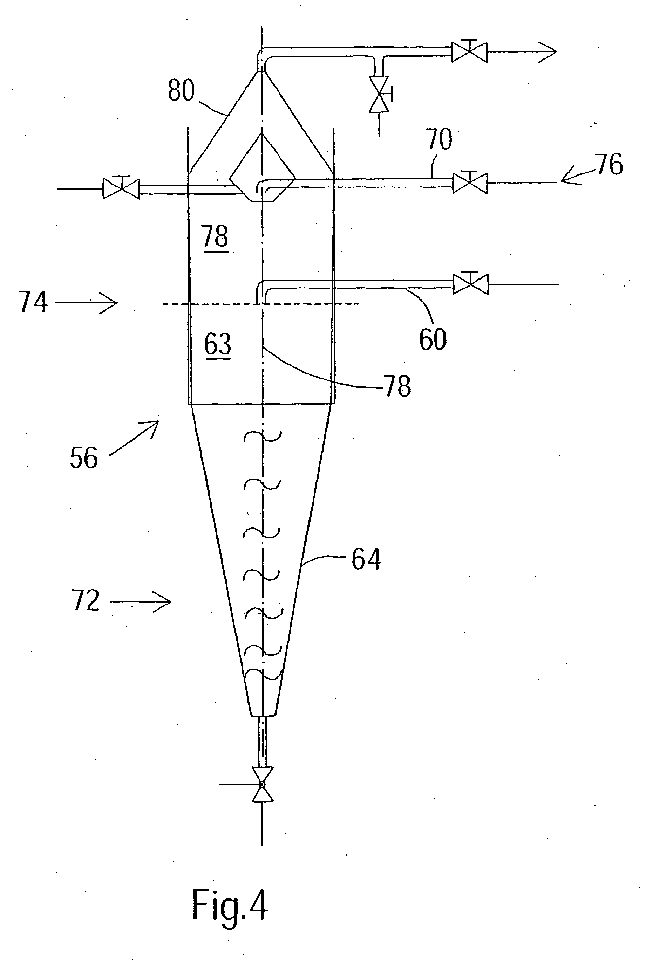

Durch die Entnahme von Teilmengen entstehen ausreichend geringe Strömungsgeschwindigkeiten in einem als Sammelbehälter zu bezeichnenden zweiten Behälter, der in Fig. 3 mit dem Bezugszeichen 54 versehen ist und prinzipiell dargestellt ist, wohingegen in Fig. 4 eine bevorzugte Ausführungsform wiedergegeben ist. Diese trägt das Bezugszeichen 56.

Die über eine Zuleitung 58, 60 dem zweiten Behälter als Sammelbehälter 54, 56 zugeführte Flüssigkeit strömt erwähntermaßen mit einer ausreichend geringen Strömungsgeschwindigkeit in den Sammelbehälter 54, 56, so dass ausreichend koagulierte Feststoffe z. B. > 0,01 mm Korngröße mittels Sedimentation gravimetrisch abgeschieden werden.

Es bildet sich eine Sedimentationszone 62, 63, die in eine Feststoffzone 64, 66 übergeht. Der Feinanteil der Suspension, der nicht sedimentiert, wird über Rücklaufleitungen 68, 70 in den Hauptkreislauf zurückgeführt, d. h. über die Leitung 44 gemäß Fig. 2. Hierdurch kann ein weiteres Wachstum dieses Feinanteils durch Anlagerung neu durch die Querstromfiltration 34 abgeschiedener Feststoffteilchen erfolgen. Diese werden sodann in einem späteren Durchfließen der Teilstromfiltration 46 abgeschieden.

Der Sammelbehälter 54, 56 ist dabei vorzugsweise derart geometrisch aufgebaut, dass der erste bodenseitig verlaufende trichterförmige Bereich 72 eine Feststoff- oder Verdichtungszone 64, 66 ist, dass in einer sich anschließenden Zone 74 der Zulauf 58, 60 mündet und dass oberhalb von diesem von einer zweiten Zone 76 der Rücklauf 68, 70 ausgeht.

Dabei erfolgt insbesondere die Flüssigkeitszugabe, also die Mündung der Leitung 58, 60 im oberen Drittel. Die Länge der entsprechenden Sammelbehälter 54, 56 sollte ferner derart sein, dass der Abstand zwischen dem Zulauf 58,60 und dem Rücklauf 68, 70 zumindest im Bereich von 30 cm liegt. Hierdurch bedingt entsteht eine Sedimentationszone 62, 63 unterhalb des Zulaufs 58, 60. Erfindungsgemäß ist auch eine horizontale Durchströmung zur Sedimentation möglich, d. h. Zu- und Ablauf befinden sich in einer oder in etwa einer gemeinsamen horizontalen Ebene. Wichtig ist die Reduktion der Strömungsgeschwindigkeit.

Unterhalb der Flüssigkeitszugabe 58, 60, die durch Strömungsvorgänge nicht oder nicht wesentlich beeinflusst wird, wird eine ungestörte gravimetrische Sedimentation ermöglicht. Durch geeignete Behältergeometrie kann auch eine Konvektionsbeeinflussung innerhalb der Sedimentationszone 62, vermindert werden.

Die Flüssigkeitszugabe wird bevorzugt zum Zentrum des Behälters, also im Bereich dessen Längsachse 78 und zum Boden hin gerichtet ausgeführt. Eine andere wie seitliche Zuführung ist gleichfalls denkbar. Dadurch wird insbesondere für kleinere Feststoffteilchen ein Geschwindigkeitsvektor erzeugt, der die Abscheidung verbessert und zusätzliche Koagulationseffekte unmittelbar nach dem Austritt in die Sedimentationszone 62 ermöglicht.

Zwischen dem Zulauf 58, 60 und dem Rücklauf 68,70 bildet sich eine sogenannte Umkehrzone (Zone 78) aus, in der die Flüssigkeit, die über die Zulaufleitung 58, 60 eingespeist wird, zum Ablauf 68,70 strömt. In dieser Umkehrzone 78 befinden sich zum größten Teil die Feststoffteilchen, die durch die Strömung nach oben getragen werden können. Bedingt durch die bewusst niedrig ausgelegte Scherbeanspruchung der Flüssigkeitsströmung können weitere Kolloide über die zuvor beschriebenen Anlagerungskräfte in dieser Zone 78 koagulieren und sich zu Agglomeraten aneinanderreihen. Dadurch wird eine gravimetrische Richtungsumkehr nach unten bewirkt und damit ein Sedimentieren. Künstliche Strömungsbarrieren und Verzögerungen unterstützen die Bildung entsprechender Agglomerationskeime. Diese der allgemeinen Kolloidströmung entgegengerichtete Sedimentation bewirkt eine weitere Anlagerung von Kolloiden und strömungsgetragenen Feststoffteilchen am Agglomerat und damit zusätzliche Abscheidung bzw. Transport in die Feststoffzone.

Stoffe, die leichter als die Suspension sind, werden die Sedimentationszone 62, 63 entgegen der Schwerkraft die Umkehrzone 78 durchwandern und im Bereich 80 des Behälters 56 gesammelt und dort von Zeit zu Zeit entfernt. Im Kopfbereich sammeln sich auch Öle und sonstige Medien, die leichter als die Flüssigkeit sind. Allerdings können die in den Kopfbereich wandernden Stoffe aufgrund des weiteren Kontaktes mit dem Bakterienkonzentrat umgesetzt werden und können somit agglomerieren, so dass diese zum Teil nach unten in die Sedimentationsstufe bzw. Feststoffzone 64 absinken.

Die Feststoffe, die schneller sedimentieren als die vorgegebene Geschwindigkeit der nach oben gerichteten Strömung in der Umkehrzone 78, können aufgrund der gewählten Ausbildung des Behälters 54, 56 ungestört in die Sedimentationszone 62, 63 gelangen und abgeschieden werden. Da mit zunehmendem Abstand vom Austritt der Zuführleitung 58, 60 die Suspension diffus zerstreut wird, werden zu jedem Zeitpunkt auch kleinste Teilchen in der Sedimentationsstufe 63 abgeschieden. Hierbei treten ebenfalls Effekte wie in der Umkehrzone beschrieben auf.

Unterhalb der Sedimentationszone 62, 63 bildet sich die Feststoffzone 64, 66 aus, in der die Feststoffe durch immer neu von oben eintreffende Schichten weiter aufgeschichtet und damit verdichtet werden. Die Verdichtung kann durch geeignete Maßnahmen wie z. B. Rütteln oder niederfrequentes Beschallen mit der Eigenfrequenz der Teilchen verstärkt werden. Erfindungsgemäß kann aus dieser Feststoffzone 64, 66 regelmäßig oder kontinuierlich eine Teilmenge zur weiteren Behandlung z. B. Trocknung entnommen werden, ohne dass eine Störung der Teilstromfiltration stattfindet.

Bei der Abscheidung von Bakterien entstehen Gase. Diese werden in der Regel in der Flüssigkeit gelöst und über die Querstromfiltrationsanlage ausgetragen.

Es ist ebenfalls möglich, dass bei entsprechender Auslegung und Fahrweise in der Feststoffzone 64, 66 die noch vorhandene bakterielle Aktivität zur vollständigen Mineralisierung des ursprünglich noch vorhandenen Nahrungsangebotes und damit Volumenreduktion genutzt wird. Entstehende Ausscheidungsprodukte der Bakterien wie CO, SO.. werden mit der Flüssigkeit aus dem System herausgespült. Es ist ebenso möglich, dass in dieser Zone, in welcher ein Umschwung von aerober zu anaerober bakterieller Aktivität stattfindet, die wieder in Lösung gehenden Radionuklide und Schwermetalle durch Reaktion wie z. B. durch Bakterienaktivität freigesetzte Schwefelionen zu unlöslichen Teilchen reagieren und damit als Feststoff ausfallen.

Die sich auf der Feststoffzone 64, 66 immer neu anlagernden Feststoffe bzw. aeroben Bakterien- und Feststoffschichten wirken als Barriere, so dass durch anaerobe Vorgänge gelöste Radionuklide und Schwermetalle nicht nach oben in die Sedimentationsstufe 62, 63 ausgewaschen werden können.

In der Feststoffzone 64, 66 ist bei entsprechender Verweildauer und geeigneten Lebensbedingungen für das Bakterienkonzentrat eine nahezu vollständige Mineralisierung möglich, die die endlagergerechte Konditionierung und Volumenreduktion unterstützt.

Die Koagulation kann - falls erforderlich - durch andere physikalische (z. B. Distanz des Sammelbehälters der Teilstromfiltration von der Querstromfiltrationsanlage) oder chemische Mechanismen wie z. B. elektrische Ionisation, Flockungshilfsmittel usw. verbessert werden. Es ist ebenso denkbar, einen Teil oder die vollständige Querstromfiltrationsanlage oder Ladungsträger erzeugende Materialien (z. B. PVC) zu fertigen oder diese in das Strömungsfeld zu geben.

Durch die immer größer werdende Feststoffzone kann aus der mittels Teilstromfiltration komplettierten Querstromanlage ein Konzentrat (Abfall oder Wertstoff) mit relativ hohem Feststoffanteil und damit geringerem Aufwand in der nachfolgenden Konditionierung bzw. in der Verwertung abgeschieden werden.

Durch das Prinzip der wiederholten Entnahme und Zugabe eines Teilstroms aus dem Hauptstrom ist es nicht erforderlich, dass eine hohe Abscheiderate durch Sedimentation in dem Sammelbehälter erreicht wird. Solange eine Abscheiderate vorliegt, wird sich der Kreislauf der Querstromfiltration von selbst stabilisieren und einen bestimmten Wert einnehmen.

Wird beispielhaft in einer Querstromanlage ein biologisch vorbehandelter Feststoff auf ca. 2,6 Vol % angereichert und in einer entsprechend ausgeführten Teilstromfiltration auf ca. 0,8 Vol % abgereichert, werden in der Teilstromfiltration etwa 70 Vol % des Feststoffes abgeschieden. Etwa 30 Vol % des Feststoffs wird als kolloidale Teilchen zurück in den Kreislauf der Querstromfiltration zur weiteren Koagulation und späteren Abscheidung geführt. Mit diesem Verfahren sind bisher nie erreichte Ausbeuten > 99 % möglich geworden.

Es ist ein ähnliches Prinzip aus der WO 01/44115 bekannt. Jedoch werden nach diesem Verfahren zur Abscheidung ein mechanischer Filter (Mikrofilter) und der entstehende Filterkuchen zur Abscheidung des Feststoffes in dem Teilstrom vorgeschlagen. Können nach diesem Verfahren größere Abscheideraten erreicht werden, so können nach der erfindungsgemäßen Lehre weitere Feststoffe aus Querstromfiltrationsanlagen kostengünstig aufkonzentriert werden.

Bei Feststoffen, wie sie z. B. aus aerob biologischen Behandlungsstufen ausgetragen werden, können undurchlässige Filterkuchen entstehen, die erfindungsgemäß allein durch die zuvor beschriebene Teilstromfiltration mit Sedimentation abgeschieden werden können.

Es sind Ausführungen von Ultrafiltrationsanlagen - auch in Kombination mit biologischer Vorbehandlung - bekannt, denen ein Vorlagebehälter, in dem der Rohabfall eingegeben wird, vorgeschaltet ist. Diese Ultrafiltrationsanlagen recyklieren ihr Konzentrat kontinuierlich zurück in diesen Behälter. Insbesondere in Kombination mit einer biologischen Vorbehandlung in dem Vorlagebehälter (Reaktor) können die hohen Verweilzeiten der Biomasse im Reaktor optimal angepasste Bakterienstämme ausbilden, die Schadstoffe hervorragend mineralisieren können. Allerdings muss aus diesem System ein Überschussschlamm abgezogen werden, um eine Blockade des Querstromfilters zu verhindern. Bei diesen oft auch beheizten und belüfteten Reaktoren finden starke Durchmischungs- und Konvektionsvorgänge statt, die die oben beschriebene Sedimentation und Abscheidung kleiner Teilchen verhindern.

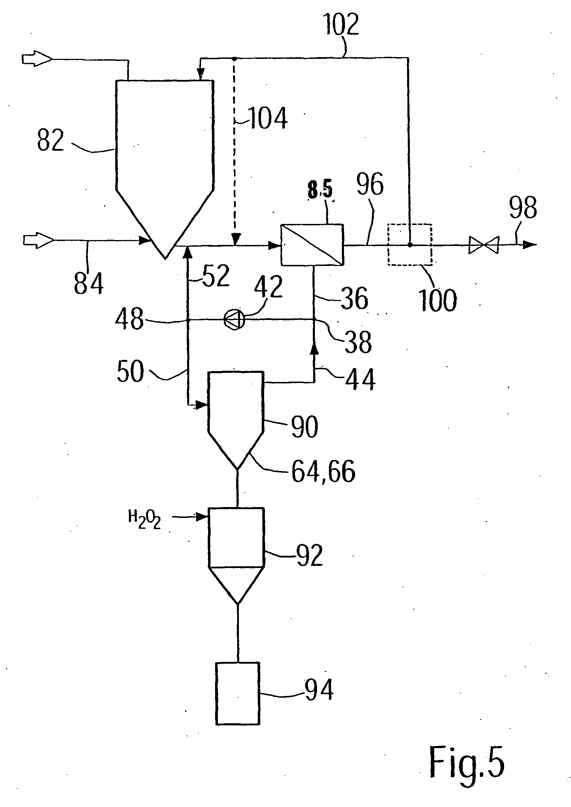

Das Gesamtprinzip der erfindungsgemäßen Lehre wird auch grundsätzlich durch Fig. 5 verdeutlicht. In einen als Reaktor zu bezeichnendem ersten Behälter 82 gelangt radioaktives Abwasser. In dem Behälter 82 erfolgt eine biologische Behandlung, also eine aerobe Zersetzung um einerseits eine Volumenreduzierung der Flüssigkeit zu erzielen und andererseits insbesondere langkettige organische Moleküle zu zerstören. Sofern in dem Behälter bzw. Reaktor 82 eine biologische Behandlung erfolgt, kann über eine Leitung 84 Luft bzw. Sauerstoff zugeführt werden.

Über eine Leitung 85 wird das vorbehandelte Abwasser von dem Behälter 82 einer Querstromfiltration 86 zuvor beschriebener Art zugeführt. Die Verbindung zwischen der Querstromfiltration 86 und einer nachgeschalteten parallel angeordneten Teilstromfiltration erfolgt in zuvor beschriebener Weise, so dass entsprechende Bezugszeichen in Bezug auf die Verbindungsleitungen benutzt werden.

Die Teilstromfiltration 90 weist dabei einen Behälter auf, wie dieser in den Fig. 3 und 4 erläutert worden ist. Aus der jeweiligen Feststoff oder Verdichtungszone 64, 66 werden die Feststoffe, bei denen es sich vorzugsweise um einen Flüssigschlamm handelt, einem weiteren Behälter 92 zugeführt, in dem durch Oxidation eine Mineralisierung erfolgt, sofern dies notwendig ist. Da eine biologische Vorbehandlung erfolgte, ist dies grundsätzlich der Fall. Erfolgte jedoch vergleichsweise und nicht erfindungsgemäß eine Vorbehandlung mittels kalter Oxidation, so kann der Behälter 92 eingespart werden. Sodann gelangen die gegebenenfalls durch Oxidation mineralisierten Feststoffe in eine Trocknungs- und gegebenenfalls in eine vorgeschaltete Entwässerungseinrichtung 94, um hochkonzentrierten endlagerfähigen Abfall zu erhalten.

Das über eine Leitung 96 die Querstromfiltration 86 verlassende Filtrat bzw. Permeat kann entweder unmittelbar als sauberes Wasser über eine Leitung 98 entnommen oder aber dann, wenn gelöste Radionuklidionen in unzulässiger Konzentration vorhanden sind, einem Ionenaustauscher, einer Elektrodeionisation oder einem elektrolytischen Abscheider oder einer Umkehrosmose zugeführt werden. Dies wird in Fig. 5 durch das gestrichelt eingezeichnete Quadrat 100 symbolisiert.

Die abgeschiedenen ionischen Radionuklide werden sodann über eine Leitung 102 entweder dem ersten Behälter 82 oder einem weiteren Behälter oder Reaktor zugeführt, um entsprechend zuvor beschriebener Weise einer Querstromfiltration und einer Teilstromfiltration unterworfen zu werden. Entsprechend kann eine Kaskadierung erfolgen.

Auch besteht die Möglichkeit, die von dem Abscheider 100 stammenden und zu recyklierenden Stoffe unmittelbar in die Leitung 84 zurückzuführen, wie durch die Verbindung 104 verdeutlicht wird.

Im Falle, dass eine Aufkonzentration durch Fällung erforderlich ist, insbesondere bei einer kalten Oxidation des Abwassers, kann dem Reaktor 82 unmittelbar oder der Leitung 84 vor der Ultrafiltration 86 Fällmittel zugegeben werden.

Vorteile und wesentliche Merkmale der erfindungsgemäßen Lehre ergeben sich aus nachstehender, allerdings nicht gewichteter Auflistung:
- modulares Verfahren mit Modulen, die bestimmte biologische, chemische und physikalische Effekte kombinieren. Im Idealfall werden Module in sequentieller Kombination verbunden: kalte Oxidation, Fällung bzw. biologische Behandlung; mechanische Abscheidung durch Querstromfiltration sowie Teilstromfiltration; gegebenenfalls ionische Separierung; Konditionierung der Konzentrate;
- Auswahl und verfahrenstechnische Optimierung der Einzelmodule ohne Beeinflussung der Nachbarmodule;
- Aerobe biologische Behandlung zur Zersetzung organischer Moleküle und Biosorption von Radionukliden;
- Beschleunigung der Zersetzung und Biosorption der Radionuklide durch Einschallen von Ultraschall in den Reaktor;
- Recyklieren und/oder Hintereinanderschalten von mehreren Bioreaktoren, um alle ionischen gelösten Radioaktivitäten abzuscheiden;
- Wegfall von ionenselektiven Methoden bei ausreichender Biosorption und mechanischer Abscheidung der Feststoffe insbesondere der kolloiden Teilchen mittels Querstromfiltration, bevorzugt Ultrafiltration;
- Funktionsfähigkeit und Schutz der nachfolgenden mechanischen Abscheidung durch biologische Vorbehandlung komplexer Moleküle;
- Mechanische Abscheidung durch Separierung der Feststoffe aus Wässern einschließlich von biologisch vorbehandelten radioaktiven Waschwässern aus Wäscherei, Boden und anderen Reinigungsaufgaben mittels Querstromfiltration wie Ultrafiltration zur Vermeidung wesentlich teurerer Zentrifugen;
- Schonende Abscheidung/Aufkonzentration der Bakterienmasse mittels einer Querstromanlage, wodurch eine Zentrifuge vermieden wird, die durch hohe Kräfte die Zellmembran zerstört und damit biosorbierte Radionuklide wieder freisetzt;
- Aufkonzentration der Bakterien und biologisch aktiven Massen durch die Kombination Bioreaktor und Querstromfiltration - ohne dass zwingend die Teilstromfiltration zu betreiben ist - mit dem Effekt der schnelleren Aufnahme der radioaktiven Stoffe in die Biomasse;
- Zersetzung der Bakterienmatrix z.B. mit H₂O₂ und damit Mineralisierung des Konzentrats zur sicheren Lagerung;
- Durch die Verwendung der Querstromfiltration insbesondere Ultrafiltration kann inaktives Bor (Natriumborat), das in dem Abwasser gelöst vorliegt, aus dem System entfernt werden und trägt somit nicht zum Endlagervolumen bei, wohingegen bei der Verwendung von Verdampfern dieses zurückgehalten wird; eine Recyklierung/ Rückgewinnung ist möglich.
- Die Kombination Querstromfiltration (Ultrafiltration) und Ionenaustauscher erlaubt es, radioaktive Abwässer vollständig bis unter Nachweisgrenze von radioaktiven Stoffen zu befreien. Dies gelingt insbesondere durch die strikte Trennung von Feststoffen (Ultrafiltration) und gelösten Stoffen (Ionenaustauscher) und deren Separierungen.
- Recyklierung des Permeats/Filtrats aus der Querstromfiltrationsanlage in einen Bioreaktor zur weiteren Abscheidung der radioaktiven Ionen mittels Biosorption;
- Recyklierung, bis nach der Querstromfiltrationsanlage ausreichend geringe Radioaktivität gelöst gemessen wird;
- Es können Fällmittel dem Kreislauf der Querstromfiltrationsanlage, bevorzugt in der Zuleitung, zugesetzt werden. Damit kann durch die innige Vermischung in der turbulenten Strömung eine ausreichend gute Fällreaktion und damit gute Abscheiderate für Radionuklide erzielt werden;
- Da das Filtrat/Permeat der Ultrafiltrationsanlage, sofern keine ausreichende Biosorption für radioaktive Stoffe erzielt wurde, ausschließlich gelöste (ionische) Stoffe enthält und damit die Oberflächen der nachfolgenden Anlageteile nicht zusetzt, erhöht sich die Effektivität der Ionenaustauscher bzw. Elektrodeionisationsanlage. Somit kann bei entsprechender Vorbehandlung von radioaktiven Abwässern auf teuere ionenselektive Ionenaustauscher verzichtet werden;
- Das rein ionische Vorliegen der Radionuklide ermöglicht es, dass diese auf Grund der elektrochemischen Spannungsreihe mittels Opferanoden bzw. Kathoden abgeschieden werden. Dazu wird das Ultrafiltrationseffluent ausreichend nahe über Oberflächen geleitet, die an Gleichspannung anliegen. Es entsteht eine Anlagerung und Konzentrierung der radioaktiven metallischen Ionen. Die Anlagerung ist allein durch die gewählte Geometrie und entstehende Dosisleistung begrenzt. Nach Erschöpfung der Anlagerungsflächen können diese im Endlagerbehälter ohne weitere Konditionierung der Endlagerung zugeführt werden. Diese Methode erlaubt hohe Aktivitätskonzentrationen auf engstem Raum und trägt damit zu einer weiteren Volumenreduktion bei;
- Teilstromkonzentration, d. h. Aufkonzentrierung der von der Querstromfiltrationsanlage zurückgehaltenen Feststoffe in einem Abscheidebehälter oder in einem als Kaskade aufgebauten Abscheidebehälter, durch den die koagulierenden Feststoffe mittels Teilstromfiltration geleitet werden. In dem Abscheidebehälter kann entweder eine mechanische Abscheidung oder eine Sedimentationsabscheidung stattfinden, wobei letztere bevorzugt ist. Ein Abscheidemechanismus bei der Sedimentation ist auf Grund der Querstromfiltration aufkonzentrierten und koagulierten kleinen Feststofftelichen möglich;
- Unterstützung der Koagulation in der Querstromfiltrationsanlage durch elektrische Felder, Magnetfelder, geeignete Werkstoffwahl, z.B. Kunststoff wie PVC Rohrleitungssysteme zur Ladungsbildung auf Feststoffteilchen oder ähnlichem;
- Unterstützung der Koagulation durch ausreichend lange Zuführstrecken von Querströmfiltrationsanlage zum Sammelbehälter der Teilstromfiltrationsanlage;
- Bildung von Koagulationskeimen durch z.B. künstliche Strömungsbarrieren insbesondere in der Umkehrzone der Sammelbehälter;
- Sedimentation koagulierter Teilchen als alleiniger Abscheidemechanismus für Feststoffe aus Querstromfilteranlagen, insbesondere bei Feststoffen, die undurchlässige Filterkuchen bilden;
- Schaffung einer durchströmungsfreien Sedimentationszone in dem Behälter der Teilstromfiltration aus der Querstromfiltration (z. B. Ultrafiltration);
- Schaffung einer ungestörten Feststoffzone im Sedimentationsbehälter;
- Unterstützung der Verdichtung der abgeschiedenen Feststoffe durch mechanische Hilfen wie z. B. Rütteln oder niederfrequente Beschallung;
- Sedimentation zur nicht thermischen Konzentration von nicht radioaktiven Feststoffen wie z.B. Gefahrstoffen oder auch zum Gewinnen und Recycling von Wertstoffen aus Lösungen wie z.B. Bakterien zur pharmazeutischen Wirkstoffherstellung, Keramiken, Edelmetallen, Polymeren usw. als Konzentrierungsschritt vor der Weiterverarbeitung;
- Ausbildung und Funktion des Sedimentationsbehälters als Ölabscheider und andere Stoffe, deren Dichte geringer als Wasser ist;
- Teilweise oder vollständige Entnahme der Sediments zur Zuführung zu einer kalten Oxidation, Entwässerung, Trocknung, Zementierung oder sonstigen Konditioniermöglichkeit;
- Bewusstes Belassen der Feststoffe in der Feststoffzone als Nahrung für sich neu entwickelnde Bakterienstämme (von anaerob im unteren Bereich und aerob im oberen Bereich der Feststoffzone des Behälters). Diese Bakterien bauen sowohl kohlenstoffhaltige, schwefelhaltige (z. B. aus Dekontmitteln stammend) und anderen Verbindungen mineralisch ab. Es verbleiben ausschließlich die metallischen Nuklide und mineralischen Feststoffe in der unteren Feststoffzone;
- Schutz der nachfolgenden ionischen Abscheidestufen durch vollständige mechanische Abtrennung der Feststoffe in der mechanischen Querstromfiltration;
- Ionenabscheidung mittels Ausnutzung des elektrochemischen Potentials der Radionuklide vor oder bevorzugt nach der vollständigen Separierung der Feststoffe durch Querstromfiltration (bevorzugt Ultrafiltration);
- Recyklierung der mittels Umkehrosmose oder Elektrodeionisation abgeschiedenen Ionen in das Modul Fällung und Erhöhung der Abscheiderate;
- Kaskadenartige Kombination der Verfahren mit Recyklierung der konzentrierten Nuklide in vorgeschalteten Verfahrensstufen;
- Duplizierung einzelner Verfahrensmodule zur Erhöhung der Abscheideraten;
- Aufkonzentrierung des Teilstroms zur Teilstromfiltration durch Gestaltung der Entnahmestelle unter Ausnutzung der Zentrifugalkräfte.
- Die Ausbeute der Ultrafiltration kann aufgrund der erfindungsgeniäßen Lehre auf > 99 % angehoben werden. Im Vergleich hierzu liegt der Wert nach dem Stand der Technik zwischen 90 % und 95 %.
- Durch die Ultrafiltration und Teilstromfiltration können nicht nur Bakterien, sondern sämtliche Feststoffe abgeschieden werden.
- Die Abreichung von Mineralien durch kontinuierliches Ausschleusen von Biomasse aus dem Bioreaktor führt zu Änderungen des Lebensraums und Anpassung und Aufnahme von z. B. gelöstem CS 137 in den Bakterien.
- Die Passage von gelösten Salzen, die von Feststoffen befreit sind, erlaubt die Recyklierung bzw. Rückgewinnung als Wertstoff.
- Kontinuierliche Abscheidung von Bakterien bzw. Biomasse aus einem Bioreaktor mittels Querstromfiltration, insbesondere Ultrafiltration in Kombination mit Teilstromfiltration nach der Erfindung verändert die Lebensbedingungen im Bioreaktor und führt dazu, dass gelöste Ionen insbesondere Metall- und radioaktive Ionen an die Biomasse verstärkt gebunden werden und anschließend mit dem Feststoff in der Teilstromfiltration abgetrennt werden können.

## Patentansprüche

1. Verfahren zum Behandeln von Abwässern in Form von radioaktivem Abwasser, Kraftwerkswässem oder mit Feststoff beladenen Wässern mit den Verfahrensschritten
- Zuführen des Abwassers in einen ersten Reaktor und Behandeln des Abwassers in diesem,
- Entnehmen des Abwassets aus dem ersten Reaktor und Zuführen des Abwassers zu einer Querstromfiltrationseinrichtung,
- Zuführen von in der Querstromfiltrationseinrichtung abgeschiedenen und/oder zurückgehaltenen Feststoffen zu einer Teilstromfiltrationseinrichtung und
- Wiederzuführen von der Teilstromfiltrationseinrichtung entnommenem und von Feststoffen teilgereinigtem Abwasser in die Querstromfiltrationseinrichtung,
**dadurch gekennzeichnet,**
**dass** in dem ersten Reaktor der organische Anteil des Abwassers durch biologisch aerobe Behandlung reduziert wird, dass der Querstromfiltrationseinrichtung entnommenes Filtrat/Permeat entweder unmittelbar genutzt oder dem ersten oder einem weiteren Reaktor zugeführt wird und dass in der Teilstromfiltrationseinrichtung Feststoffe gravimetrisch in einem Behälter abgeschieden werden, wobei in einer bodenseitigen Zone des zweiten Behälters Feststoffe verdichtet werden, in einer nachfolgenden über der ersten Zone verlaufenden Sedimentationsstufe oder über diese das von der Querstromfiltration stammende aufkonzentrierte Abwasser über einen Zulauf zugeführt wird und oberhalb oder seitlich der Sedimentationszone Abwasser über eine Ablauf abgeführt wird.

2. Verfahren nach Anspruch 1,
**dadurch gekennzeichnet,**
**dass** der Querstromfiltration ein Ionenaustauscher und/oder eine Elektrodeionisationsstufe nachgeschaltet wird, von dem bzw. der ionische Radionuklide dem ersten Behälter oder einem weiteren Behälter zugeführt werden.

3. Verfahren nach Anspruch 1,
**dadurch gekennzeichnet,**
**dass** Steiggeschwindigkeit V der Flüssigkeit zwischen dem Zulauf und dem Ablauf derart eingestellt wird, dass eine Sedimentation von Partikeln ermöglicht wird.

4. Verfahren nach Anspruch 1,
**dadurch gekennzeichnet,**
**dass** die Steiggeschwindigkeit V zwischen in etwa 0,1 cm/min bis in etwa ≤ 5 cm/min, insbesondere in etwa 2 cm/min eingestellt wird.

5. Verfahren nach Anspruch 1,
**dadurch gekennzeichnet,**
**dass** der Feststoffzone des Behälters Feststoffe in Form von Flüssigschlamm entnommen und sodann getrocknet wird.

6. Verfahren nach Anspruch 5,
**dadurch gekennzeichnet,**
**dass** vor Trocknen des Flüssigschlamms dieser durch Oxidation bei Bakterienabscheidung inertisiert wird.

7. Verfahren nach Anspruch 1,
**dadurch gekennzeichnet,**
**dass** aufkonzentriertes Abwasser der Teilstromfltration über einen parallel zum Hauptkreislauf bzw. Spülstrom der Querstromfiltration verlaufenden gegebenenfalls ein Förderaggregat aufweisenden Teilstromkreis geführt wird, in dem ein Teil des aufkonzentrierten Abwassers unmittelbar in die Teilstromfiltration strömt.

8. Verfahren nach Anspruch 1,
**dadurch gekennzeichnet,**
**dass** der in der Teilstromfiltration von dem zu behandelnden Abwasser durchströmte Behälter eine bodenseitige Feststoffzone, eine sich an diese anschließende Sedimentationsstufe sowie eine über diese verlaufende Umkehrzone umfasst.

9. Verfahren nach Anspruch 1,
**dadurch gekennzeichnet,**
**dass** für die Durchführung des Verfahrens eine Abscheiderate > 0 in dem Behälter ausreicht.

10. Verfahren nach Anspruch 8,
**dadurch gekennzeichnet,**
**dass** das zu reinigende Abwasser in der Sedimentationsstufe oder zwischen der Sedimentationsstufe und der Umkehrzone einströmt.

11. Verfahren nach Anspruch 8,
**dadurch gekennzeichnet,**
**dass** die Flüssigkeit in der Umkehrzone bei minimaler Einwirkung von Scherkräften auf in der Flüssigkeit vorhandene Partikel strömt.

12. Verfahren nach Anspruch 1,
**dadurch gekennzeichnet,**
**dass** Abscheidung der durch Biosorption angelagerten Radioaktivität aerob vorbehandelter radioaktiver Abwässer mittels Ultrafiltration und Teilstromfiltration erfolgt.

13. Verfahren nach Anspruch 1,
**dadurch gekennzeichnet,**
**dass** Zersetzung und/oder Biosorption von Radionukliden durch Einschallen von Ultraschall beschleunigt wird.

14. Verfahren nach Anspruch 1,
**dadurch gekennzeichnet,**
**dass** durch die Querstromfiltration, insbesondere Ultrafiltration in dem Abwasser gelöst vorliegende inaktive Salze und Inhaltsstoffe aus dem Permeat zurückgewonnen werden.

15. Verfahren nach Anspruch 1,
**dadurch gekennzeichnet,**
**dass** radioaktives Abwasser vollständig oder nahezu vollständig bis unter die Nachweisgrenze von radioaktiven Stoffen **dadurch** befreit wird, dass mittels der Querstrom- bzw. Ultrafiltration Feststoffe und mittels Ionentauscher gelöste Stoffe aus dem Abwasser entfernt werden.

16. Verfahren nach Anspruch 1,
**dadurch gekennzeichnet,**
**dass** in einem weiteren Bioreaktor radioaktive Ionen von der Querstromfiltration entnommenem Permeat/Filtrat mittels Biosorption entfernt werden.

17. Verfahren nach Anspruch 1,
**dadurch gekennzeichnet,**
**dass** im Kreislauf der Querstromfiltration, insbesondere in einer Zuleitung fäll-und koagulationsunterstützende Mittel zugesetzt werden.

18. Verfahren nach Anspruch 1,
**dadurch gekennzeichnet,**
**dass** der Querstromfiltration bzw. Ultrafiltration Filtrat/Permeat entnommen wird, das ausschließlich oder nahezu ausschließlich gelöste (ionische) Stoffe enthält.

19. Verfahren nach Anspruch 1,
**dadurch gekennzeichnet,**
**dass** in einem Abscheidebehälter bzw. dem Behälter oder in einem als Kaskade aufgebauten Abscheidebehälter eine Aufkonzentrierung von der Querstromfiltration zurückgehaltenen Feststoffen erfolgt.

20. Verfahren nach Anspruch 1,
**dadurch gekennzeichnet,**
**dass** in dem Abscheidebehälter eine Aufkonzentration der Feststoffe durch mechanische Abscheidung oder Sedimentieren erfolgt.

21. Verfahren nach Anspruch 1,
**dadurch gekennzeichnet,**
**dass** in der Querstromfiltration eine Koagulation durch elektrische Felder, Magnetfelder, geeignete Werkstoffwahl wie z. B. Kunststoffe wie PVC-Rohrleitungssysteme, zur Ladungsbildung auf Feststoffteilchen unterstützt wird.

22. Verfahren nach Anspruch 1,
**dadurch gekennzeichnet,**
**dass** die Koagulation auf der Konzentratseite durch ausreichend lange Zuführstrecken von der Querstromfiltration bzw. Querstromfiltrationsanlage zum zweiten Behälter oder Sammelbehälter der Teilstromfiltration unterstützt wird.

23. Verfahren nach Anspruch 1,
**dadurch gekennzeichnet,**
**dass** Koagulationskeime durch z. B. künstliche Strömungsbarrieren insbesondere in Umkehrzone des Behälters der Teilstromfiltration gebildet wird.

24. Verfahren nach Anspruch 1,
**dadurch gekennzeichnet,**
**dass** als alleiniger Abscheidemechanismus für Feststoffe aus der Querstromfiltration die Sedimentation koagulierter Teilchen erfolgt.

25. Verfahren nach Anspruch 1,
**dadurch gekennzeichnet,**
**dass** in dem Behälter der Teilstromfiltration durchströmungsfreie Sedimentationszonen gebildet werden.

26. Verfahren nach Anspruch 1,
**dadurch gekennzeichnet,**
**dass** in dem Behälter der Teilstromfiltration ungestörte Feststoffzonen gebildet werden.

27. Verfahren nach Anspruch 1,
**dadurch gekennzeichnet,**
**dass** abgeschiedene Feststoffe durch mechanische Hilfen wie z. B. Rütteln oder niederfrequente Beschallung verdichtet werden bzw. deren Verdichtung unterstützt wird.

28. Verfahren nach Anspruch 1,
**dadurch gekennzeichnet,**
**dass** der Behälter der Teilstromfiltration als Ölabscheider oder Abscheider für Stoffe, deren Dichte geringer als Wasser ist, ausgebildet wird.

29. Verfahren nach Anspruch 1,
**dadurch gekennzeichnet,**
**dass** aus dem Behälter Sediment zumindest teilweise entnommen und einer kalten Oxidation, Entwässerung, Trocknung, Zementierung oder sonstiger Konditionierung zugeführt wird.

30. Verfahren nach Anspruch 1,
**dadurch gekennzeichnet,**
**dass** vor, bevorzugterweise nach vollständiger Separierung der Feststoffe durch Querstrom- wie Ultrafiltration eine Ionenabscheidung mittels Ausnutzung von elektrochemischem Potential der Radionuklide erfolgt,

31. Verfahren nach Anspruch 1,
**dadurch gekennzeichnet,**
**dass** mittels Umkehrosmose und/oder Elektrodeionisation abgeschiedene Ionen in ein Fällungsmodul recycliert werden.

32. Verfahren nach Anspruch 1,
**dadurch gekennzeichnet,**
**dass** ein Teilstrom der Teilstromfiltration durch Gestaltung der Entnahmestelle und/oder der Ausnutzung von Zentrifugalkräften aufkonzentriert wird.

33. Verfahren nach Anspruch 1,
**dadurch gekennzeichnet,**
**dass** ein Sedimentieren zur nicht thermischen Konzentration von nicht radioaktiven Feststoffen und/oder ein Gewinnen und Recyceln von Wertstoffen aus Lösungen wie z. B. Bakterien zur pharmazeutischen Wirkstoffherstellung, Keramiken, Edelmetallen, Polymeren als Konzentrierungsschritt vor der Weiterverarbeitung erfolgt.

34. Verfahren nach Anspruch 1,
**dadurch gekennzeichnet,**
**dass** das Wiederzuführen des teilgereinigten Abwassers in die Querstromfiltration wiederholt bzw. kontinuierlich erfolgt.

## Claims

1. Method for treatment of waste water in the form of radioactive waste water, power station water or solids-laden water by means of the method steps
- supply of the waste water into a first reactor and treatment of the waste water therein,
- removal of the waste water from the first reactor and supply of the waste water to a cross-flow filtration device,
- supply of solids separated and/or retained in the cross-flow filtration device to a partial-flow filtration device and
- resupply of waste water removed from the partial-flow filtration device and partially cleaned of solids to the cross-flow filtration device,
**wherein**
in the first reactor the organic proportion of the waste water is reduced by biologically aerobic treatment, the filtrate/permeate removed from the cross-flow filtration device is either directly used or supplied to the first or to a further reactor, and solids are gravimetrically separated in a tank in the partial-flow filtration device, where solids are compacted in a bottom zone of the second tank, in a subsequent sedimentation stage above the first zone or via the latter concentrated waste water coming from cross-flow filtration is supplied via an inlet and waste water is drawn off via an outlet above or at the side of the sedimentation zone.

2. Method according to Claim 1,
**wherein**
the cross-flow filtration is followed by an ion exchanger and/or an electrode ionization stage from which ionic radionuclides are supplied to the first tank or to a further tank.

3. Method according to Claim 1,
**wherein**
the rise velocity V of the liquid between the inlet and the outlet is set such that a sedimentation of particles is enabled.

4. Method according to Claim 1,
**wherein**
the rise velocity V is set between about 0.1 cm/min and about ≤ 5 cm/min, in particular about 2 cm/min.

5. Method according to Claim 1,
**wherein**
the solids in the form of liquid sludge are removed from the solids zone of the tank and then dried.

6. Method according to Claim 5,
**wherein**
before drying of the liquid sludge it is inertized by oxidation during bacterial separation.

7. Method according to Claim 1,
**wherein**
concentrated waste water is supplied to the partial-flow filtration via a partial-flow circuit running parallel to the main circuit or flushing flow of the cross-flow filtration and if necessary having a conveying unit, in which circuit part of the concentrated waste water flows directly into the partial-flow filtration.

8. Method according to Claim 1,
**wherein**
the tank in the partial-flow filtration through which flows the waste water to be treated comprises a solids zone on the bottom side, an sedimentation stage adjacent thereto and a reversal zone running above this.

9. Method according to Claim 1,
**wherein**
a separation rate of > 0 in the tank is sufficient for performance of the method.

10. Method according to Claim 8,
**wherein**
the waste water to be cleaned flows in the sedimentation stage or between the sedimentation stage and the reversal zone.

11. Method according to Claim 8,
**wherein**
the liquid flows in the reversal zone with minimal effect of shear forces on the particles present in the liquid.

12. Method according to Claim 1,
**wherein**
separation of radioactive waste water aerobically pretreated by biosorption of accumulated radioactivity is by means of ultrafiltration and partial-flow filtration.

13. Method according to Claim 1,
**wherein**
disintegration and/or biosorption of radionuclides is accelerated by acoustic irradiation with ultrasound.

14. Method according to Claim 1,
**wherein**
inactive salts and constituents present in dissolved form in the waste water are retrieved from the permeate by cross-flow filtration, in particular ultrafiltration.

15. Method according to Claim 1,
**wherein**
radioactive waste water is freed completely or almost completely of radioactive substances to below the limit of detection in that solids and substances dissolved by ion exchangers are removed from the waste water by means of cross-flow or ultrafiltration.

16. Method according to Claim 1,
**wherein**
in a further bioreactor, radioactive ions are removed by means of biosorption from the permeate/filtrate removed from cross-flow filtration.

17. Method according to Claim 1,
**wherein**
precipitation-promoting and coagulation-promoting agents are added in the cross-flow filtration circuit, in particular in an inlet line.

18. Method according to Claim 1,
**wherein**
filtrate/permeate is removed from the cross-flow filtration or ultrafiltration that contains exclusively or almost exclusively dissolved (ionic) substances.

19. Method according to Claim 1,
**wherein**
concentration of solids retained by the cross-flow filtration takes place in a separating tank or in a tank or in a separating tank designed as a cascade.

20. Method according to Claim 1,
**wherein**
concentration of solids takes place in the separating tank by mechanical separation or sedimentation.

21. Method according to Claim 1,
**wherein**
coagulation by electric fields, magnetic fields, suitable material selection of for example plastics such as PVC piping systems, is supported in the cross-flow filtration for charge formation on solid particles.

22. Method according to Claim 1,
**wherein**
coagulation on the concentrate side is supported by sufficiently long supply distances from the cross-flow filtration or cross-flow filtration system to the second tank or collecting tank of the partial-flow filtration.

23. Method according to Claim 1,
**wherein**
coagulation bacteria are formed for example by artificial flow barriers, in particular in the reversal zone of the tank of the partial-flow filtration.

24. Method according to Claim 8,
**wherein**
sedimentation of coagulated particles takes place as the sole separating mechanism for solids from the cross-flow filtration.

25. Method according to Claim 1,
**wherein**
sedimentation zones free from through-flow are formed in the tank of the partial-flow filtration.

26. Method according to Claim 1,
**wherein**
undisturbed solids zones are formed in the tank of the partial-flow filtration.

27. Method according to Claim 1,
**wherein**
separated solids are compacted or their compaction is supported by mechanical aids, for example, oscillation or low-frequency acoustic irradiation.

28. Method according to Claim 1,
**wherein**
the tank of the partial-flow filtration is designed as an oil separator or as a separator for substances whose density is less than that of water.

29. Method according to Claim 1,
**wherein**
sediment is at least partially removed from the tank and passed on for cold oxidation, dewatering, drying, cementing or other conditioning.

30. Method according to Claim 1,
**wherein**
ion separation by means of utilization of the electrochemical potential of the radionuclides takes place before, preferably after, complete separation of the solids by cross-flow filtration such as ultrafiltration.

31. Method according to Claim 1,
**wherein**
separated ions are recycled into a precipitation module by means of reverse osmosis and/or electrode ionization.

32. Method according to Claim 1,
**wherein**
a partial flow of the partial-flow filtration is concentrated by design of the tapping point and/or utilization of centrifugal forces.

33. Method according to Claim 1,
**wherein**
sedimentation takes places for non-thermal concentration of non-radioactive solids and/or retrieval and recycling of valuable substances from solutions, such as bacteria for pharmaceutical agent manufacture, ceramics, precious metals, polymers, as the concentration step before further processing.

34. Method according to Claim 1,
**wherein**
supply of the partially cleaned waste water back into the cross-flow filtration takes place repeatedly or continuously.

## Revendications

1. Procédé de traitement d'eaux résiduelles constituées par des eaux résiduelles radioactives, des eaux d'usines ou des eaux chargées en matières solides comportant les étapes suivantes :
- introduction puis traitement des eaux des eaux résiduelles dans un premier réacteur,
- extraction des eaux résiduelles du premier réacteur et introduction des eaux résiduelles dans une installation de filtration à courant transversal,
- introduction des matières solides séparées et/ou retenues dans l'installation de filtration à courant transversal dans une installation de filtration à courant partiel, et
- réintroduction des eaux résiduelles extraites de l'installation de filtration à courant partiel et partiellement débarrassées des matières solides dans l'installation de filtration à courant transversal,
**caractérisé en ce que**
dans le premier réacteur, la fraction organique des eaux résiduelles est réduite par traitement biologique aérobie, le filtrat/perméat extrait de l'installation de filtration à courant transversal étant soit immédiatement utilisé, soit transféré dans le premier ou dans un autre réacteur, et dans l'installation de filtration à courant partiel, des matières solides sont séparées par gravimétrie dans une enceinte réactionnelle, des matières solides étant compactées dans une zone de fond de la seconde enceinte, les eaux résiduelles concentrées provenant de la filtration transversale étant conduites par une entrée dans un étage de sédimentation subséquent mis en oeuvre au-dessus de la première zone, ou au-dessus de cet étage, et les eaux résiduelles étant évacuées par une sortie au-dessus de la zone de sédimentation ou latéralement à celle-ci.

2. Procédé selon la revendication 1,
**caractérisé en ce qu'**
en aval de la filtration à courant transversal est branché un échangeur d'ions et/ou un étage d'ionisation par électrodes d'où les radionucléides ioniques sont transférés à la première enceinte réactionnelle ou à une autre enceinte.

3. Procédé selon la revendication 1,
**caractérisé en ce que**
la vitesse ascendante V du liquide entre l'entrée et la sortie est réglée de façon à permettre une sédimentation de particules.

4. Procédé selon la revendication 1,
**caractérisé en ce que**
la vitesse ascendante V est réglée entre environ 0,1 cm/mn jusqu'à environ ≤ 5 cm/mn, en particulier à environ 2 cm/mn.

5. Procédé selon la revendication 1,
**caractérisé en ce qu'**
on extrait de la zone solide de l'enceinte réactionnelle des matières solides sous la forme d'une boue liquide et on la sèche.

6. Procédé selon la revendication 5,
**caractérisé en ce qu'**
avant de sécher la boue liquide, on la rend inerte par oxydation en présence d'une précipitation bactérienne.

7. Procédé selon la revendication 1,
**caractérisé en ce que**
les eaux résiduelles concentrées de la filtration à courant partiel sont conduites à un circuit de courant partiel, comportant le cas échéant une unité de mise en circulation, s'étendant parallèlement au circuit principal ou au courant de rinçage de la filtration à courant transversal et dans lequel une partie des eaux résiduelles concentrées s'écoule directement dans la filtration à courant partiel.

8. Procédé selon la revendication 1,
**caractérisé en ce que**
l'enceinte réactionnelle, traversée par les eaux résiduelles à traiter dans la filtration à courant partiel, comporte une zone de solides située côté fond, un étage de sédimentation contigu à celle-ci ainsi qu'une zone d'inversion située au-dessus.

9. Procédé selon la revendication 1,
**caractérisé en ce que**
pour la mise en oeuvre du procédé, un taux de séparation > 0 est suffisant dans l'enceinte réactionnelle.

10. Procédé selon la revendication 8,
**caractérisé en ce que**
les eaux résiduelles à épurer sont introduites dans l'étage de sédimentation ou entre l'étage de sédimentation et la zone d'inversion.

11. Procédé selon la revendication 8,
**caractérisé en ce que**
dans la zone d'inversion le liquide circule de sorte que l'action des efforts de cisaillement sur les particules présentes soit minimale.

12. Procédé selon la revendication 1,
**caractérisé en ce que**
la séparation de la radioactivité fixée par biosorption d'eaux résiduelles radioactives ayant préalablement subi un traitement aérobie s'effectue par ultrafiltration et filtration à courant partiel.

13. Procédé selon la revendication 1,
**caractérisé en ce qu'**
on accélère la décomposition et/ou la biosorption des radionucléides par irradiation par ultrasons.

14. Procédé selon la revendication 1,
**caractérisé en ce que**
les sels et composants inactifs présents à l'état dissout dans les eaux résiduelles sont récupérés du perméat par la filtration à courant transversal en particulier par l'ultrafiltration.

15. Procédé selon la revendication 1,
**caractérisé en ce que**
des eaux résiduelles radioactives sont débarrassées de leurs substances radioactives totalement ou pratiquement totalement jusqu'en dessous de la limite décelable suite à l'élimination de celles-ci des matières solides par la filtration à courant transversal ou par l'ultrafiltration et à l'élimination de matières dissoutes par l'échangeur d'ions.

16. Procédé selon la revendication 1,
**caractérisé en ce que**
des ions radioactifs sont éliminés du perméat/filtrat extrait de la filtration à courant transversal par biosorption dans un autre bioréacteur.

17. Procédé selon la revendication 1,
**caractérisé en ce que**
dans le circuit de la filtration à courant transversal, en particulier dans une conduite d'alimentation de celui-ci, on ajoute des agents facilitant la précipitation et la coagulation.

18. Procédé selon la revendication 1,
**caractérisé en ce qu'**
on extrait de la filtration à courant transversal ou de l'ultra filtration un filtrat/perméat qui renferme exclusivement ou essentiellement exclusivement des matières (ioniques) dissoutes.

19. Procédé selon la revendication 1,
**caractérisé en ce que**
dans une enceinte de séparation ou l'enceinte réactionnelle ou dans une enceinte de séparation réalisée sous la forme d'un montage en cascade, on effectue une concentration des matières solides retenues par la filtration à courant transversal.

20. Procédé selon la revendication 1,
**caractérisé en ce que**
dans l'enceinte de séparation, on effectue une concentration des matières solides par séparation mécanique ou sédimentation.

21. Procédé selon la revendication 1,
**caractérisé en ce que**
dans la filtration à courant transversal, on favorise une coagulation par des champs électriques, des champs magnétiques, un choix approprié de matériaux par exemple des matières synthétiques telles que des systèmes de conduites tubulaires en PVC pour former une charge de petites particules solides.

22. Procédé selon la revendication 1,
**caractérisé en ce qu'**
on favorise la coagulation côté concentrat par des lignes d'alimentation suffisamment longues entre la filtration à courant transversal ou l'installation de filtration à courant transversal et la seconde enceinte réactionnelle ou l'enceinte collectrice de la filtration à courant partiel.

23. Procédé selon la revendication 1,
**caractérisé en ce qu'**
on forme des germes de coagulation par par exemple des barrières d'écoulement synthétiques en particulier dans la zone d'inversion de l'enceinte réactionnelle de la filtration à courant partiel.

24. Procédé selon la revendication 1,
**caractérisé en ce que**
le seul mécanisme de séparation des matières solides provenant de la filtration à courant transversal, est la sédimentation de petites particules coagulées.

25. Procédé selon la revendication 1,
**caractérisé en ce que**
des zones de sédimentation sans écoulement sont formées dans l'enceinte réactionnelle de la filtration à courant partiel.

26. Procédé selon la revendication 1,
**caractérisé en ce que**
des zones de matières solides non perturbées sont formées dans l'enceinte réactionnelle de la filtration à courant partiel.

27. Procédé selon la revendication 1,
**caractérisé en ce qu'**
on compacte des matières solides séparées à l'aide de moyens mécaniques tels que par exemple le vibrage ou l'exposition à des sons à basse fréquence basse, ou, on favorise leur compactage.

28. Procédé selon la revendication 1,
**caractérisé en ce que**
l'enceinte réactionnelle de la filtration à courant partiel est réalisée sous la forme d'un deshuileur ou d'un séparateur de matières dont la densité est inférieure à celle de l'eau.

29. Procédé selon la revendication 1,
**caractérisé en ce qu'**
on extrait au moins partiellement le sédiment du collecteur et on le transfère à une oxydation à froid, une dessiccation, un séchage, une cémentation ou à un autre conditionnement.

30. Procédé selon la revendication 1,
**caractérisé en ce qu'**
avant mais de préférence après la séparation totale des matières solides par filtration à courant transversal telle que l'ultrafiltration, on effectue une séparation ionique en utilisant le potentiel électrochimique des radionucléides.

31. Procédé selon la revendication 1,
**caractérisé en ce que**
dans un module de précipitation on recycle les ions séparés par osmose inverse et/ou par ionisation par électrodes.

32. Procédé selon la revendication 1,
**caractérisé en ce qu'**
on concentre un courant partiel de la filtration à courant partiel par conformation du point d'extraction et/ou utilisation de forces centrifuges.

33. Procédé selon la revendication 1,
**caractérisé en ce qu'**
on effectue une sédimentation pour une concentration non thermique de matières solides non radioactives et/ou une obtention et un recyclage de matières de valeur provenant de solutions telles que des bactéries pour l'obtention de matières actives pharmaceutiques, des céramiques, des métaux précieux, des polymères en tant qu'étape de concentration avant le traitement ultérieur.

34. Procédé selon la revendication 1,
**caractérisé en ce que**
la réintroduction des eaux résiduelles partiellement purifiées dans la filtration à courant transversal est effectuée de manière répétée ou en continu.
